# EUROPÄISCHE PATENTANMELDUNG

(11) **EP 4 286 085 A1**
(43) Veröffentlichungstag der Anmeldung: **06.12.2023**
(21) Anmeldenummer: 22177171.0
(22) Anmeldetag: 03.06.2022
(51) Int. Cl.: B23F 21/00, B23F 19/12, B24D 5/06, B24D 5/12, B24D 5/14, B24D 18/00, B24D 3/28, B24D 3/32

(54) **SCHLEIFWERKZEUG ZUR BEARBEITUNG VON ZAHNRÄDERN**

(71) Anmelder: Hermes Schleifmittel GmbH, 22547 Hamburg (DE)
(72) Erfinder: DESPANG, Florian, 22547 Hamburg (DE); LINASCHKE, Dorit, 22547 Hamburg (DE); SCHRENK, Ronni, 22547 Hamburg (DE)
(74) Vertreter: Glawe, Delfs, Moll

(57) **Zusammenfassung**

Gegenstand der Erfindung ist ein profiliertes Schleifwerkzeug (7) zur rotierenden Bearbeitung von Werkstücken, insbesondere Zahnrädern und/oder Getrieberädern, mit einem Grundkörper, der wenigstens eine als vorzugsweise hohlzylindrische Ausformung (6) ausgebildete Einrichtung zum Aufspannen auf einen Werkzeugträger aufweist, und mit wenigstens zwei in Axialrichtung voneinander beabstandeten und in Umfangsrichtung wirkenden Schleifsegmenten (1, 3), wobei das zweite Schleifsegment (3) einen Elastizitätsmodul aufweist, der geringer ist als der Elastizitätsmodul des ersten Schleifsegments (1). Erfindungsgemäß ist vorgesehen, dass der Grundkörper mit dem ersten Schleifsegment (1) einstückig ausgebildet ist, und dass der Grundkörper axial beabstandet vom ersten Schleifsegment (1) wenigstens einen Tragabschnitt (2) aufweist, mit dessen Umfang wenigstens ein zweites Schleifsegment (3) dauerhaft kraftschlüssig verbunden ist. Gegenstand der Erfindung ist ferner ein Verfahren zur Herstellung eines erfindungsgemäßen Schleifwerkzeugs.

## Beschreibung

Die Erfindung betrifft ein profiliertes Schleifwerkzeug zur rotierenden Bearbeitung von Werkstücken, insbesondere Zahnrädern und/oder Getrieberädern, mit einem Grundkörper, der wenigstens eine als vorzugsweise hohlzylindrische Ausformung ausgebildete Einrichtung zum Aufspannen auf einen Werkzeugträger aufweist, und mit wenigstens zwei in Axialrichtung voneinander beabstandeten und in Umfangsrichtung wirkenden Schleifsegmenten, wobei das zweite Schleifsegment einen Elastizitätsmodul aufweist, der geringer ist als der Elastizitätsmodul des ersten Schleifsegments.

Zahnräder weisen eine hohe Qualität auf, wenn sie bei entsprechender Materialbeschaffenheit sowohl eine exakte Geometrie als auch eine definierte Oberflächenstruktur aufweisen. Bei der Herstellung kann zwischen einer Vorfertigung und einer Endbearbeitung unterschieden werden.

Die Vorfertigung kann beispielsweise mittels Wälz- oder Scheibenfräsen mit anschließender Einsatzhärtung erfolgen. Wichtige Qualitätsmerkmale wie ein exaktes Zahnprofil oder definierte Spitzen- und Kerndurchmesser werden oft nicht im Rahmen der Vorfertigung, sondern erst in einem nachfolgenden Prozess der Endbearbeitung erreicht.

Bei der Endbearbeitung werden vorgefertigte Zahnräder mit profilierten Schleifwerkzeugen bearbeitet, deren Profilierung der Zahnradgeometrie entspricht. Dabei wird zwischen mehreren Bearbeitungsschritten unterschieden. Zunächst erfolgt eine Bearbeitung mit einem vorzugsweise keramisch gebundenen Schleifkörper, wobei durch Materialabtrag eine Anpassung der geometrischen Beschaffenheit, zum Beispiel der der Zahnflankengeometrie, erreicht werden soll. Weil Schleifprozesse mit einem erheblichen Materialabtrag tendenziell eine raue Oberfläche erzeugen, wird in einem weiteren Bearbeitungsschritt die Oberfläche bearbeitet.

Maßgeblich ist hier, die Oberflächenstruktur der gewünschten Funktionalität entsprechend zu modifizieren. Dabei wird in vielen Fällen die Rautiefe verringert und ggf. die Oberfläche in definierter Weise (Abtrag von Rauigkeitsspitzen) strukturiert, um beispielsweise eine hinreichende Ölhaltung zu gewährleisten. Im Ergebnis werden Zahnräder mit einem ruhigen, vibrations- und verlustarmen Lauf erhalten.

Die einzelnen Bearbeitungsschritte der Endbearbeitung, das Abtragen und die Oberflächenstrukturierung, werden nach dem Stand der Technik von einem Schleifwerkzeug übernommen.

Dieses Werkzeug weist eine walzenförmige Geometrie mit einer profilierten Oberfläche auf. Es ist in axialer Richtung in einzelne Segmente unterteilt, wobei die Segmente eine unterschiedliche Beschaffenheit aufweisen. Sie können sich hinsichtlich Schleifmittel, Körnung und Bindemittel unterscheiden um die jeweils angestrebte Funktionalität im Endbearbeitungsprozess zu gewährleisten.

Bei üblichen Ausführungsformen bestehen Schleifwerkzeuge aus zwei Segmenten, wobei das eine Segment eine keramische und damit vergleichsweise harte Bindung mit gröberem Korn und das weitere Segment eine weiche, aus einem organischen Polymer bestehende Bindung mit feinerem Korn aufweist. Beide Segmente sind unlösbar miteinander verbunden und werden als eine Einheit auf die entsprechende Maschinenwelle aufgespannt.

Im Sinne einer rationellen Fertigung, aber auch um das entsprechende Bearbeitungsergebnis zu erreichen, werden derartige Werkzeuge mit höheren Arbeitsgeschwindigkeiten betrieben, so z. B. mit einer Arbeitshöchstgeschwindigkeit von 80 m/s.

Üblich sind derartige Arbeitshöchstgeschwindigkeiten bei mechanisch festen, stabilen und dehnungsarmen Schleifwerkzeugen wie z. B. Schleifscheiben mit keramischer Bindung, mit Kunstharzbindung oder auch bei Vulkanfiberschleifscheiben.

Die gewünschten Ergebnisse im letzten Schritt der Endbearbeitung sind jedoch nur mit weich gebundenem Schleifmittel zu erzielen, wobei als Bindemittel häufig ein Polyurethan-Polymer zur Anwendung kommt.

Das Segment mit dem weich gebundenen Schleifmittel muss eine hinreichende Festigkeit gegenüber Fliehkräften aufweisen. Unabhängig davon weist es eine elastische Verformbarkeit auf. Diese elastische Verformbarkeit bewirkt eine Verformung des Segmentes durch Fliehkräfte.

Das Schleifwerkzeug wird üblicherweise auf eine Maschinenwelle aufgeschoben und jeweils stirnseitig mittels eines Flansches kraftschlüssig aufgespannt. Dabei können die Spannkräfte auf der Seite des weich gebundenen Segments dieses deformieren, was ebenfalls eine Beeinträchtigung der Profiltreue bewirkt.

Es gibt unterschiedliche Versuche, die benannten Probleme zu lösen. So kann die Härte der weichen Bindung derart eingestellt werden, dass die unerwünschten elastischen Verformungen vermieden werden. Weil aber eine weiche, elastische Bindung maßgeblich für das Ergebnis der Endbearbeitung sein kann, würde dies zu einer unerwünschten Einschränkung der Funktionalität des Schleifwerkzeuges führen.

Eine weitere Ausführung sieht einen besonderen Aufbau des weicheren Segments vor. Dieses besteht aus einem inneren, härteren Ring und aus einem äußeren, für die Bearbeitung vorgesehenen weicheren Ring vor. Diese Konstruktion ermöglicht die Aufnahme der Spannkräfte durch den härteren, inneren Ring, ohne dass der elastisch gebundene, äußere Ring deformiert wird. Nachteilig ist hierbei allerdings der hohe Fertigungsaufwand und das Erfordernis, beide Segmente stirnseitig kraftschlüssig und verdrehsicher miteinander zu verbinden.

Bekannt ist der Einsatz von Grundkörpern mit einem hohen Elastizitätsmodul (z.B. DE10104410A1) sowie der Einsatz von Kombinationsschleifkörpern oder Schleifwerkzeugen mit zwei Schleifzonen bei Verfahren zur Herstellung eines mit einer Verzahnung oder Profilierung versehenen Werkstücks (z. B. DE102019115294A1). Beispielsweise werden die beiden Körper auf ein Kunststoffrohr geklebt.

Der Erfindung liegt die Aufgabe zugrunde, ein profiliertes Schleifwerkzeug der eingangs genannten Art zur Verfügung zu stellen, das auch bei hohen Schleifgeschwindigkeiten stabil bleibt und eine hohe Präzision der zu bearbeitenden Oberflächenstrukturen erreicht.

Ausgehend vom genannten Stand der Technik wird die Aufgabe gelöst mit den Merkmalen des Anspruchs 1. Vorteilhafte Ausführungen sind in den Unteransprüchen gegeben.

Erfindungsgemäß ist somit vorgesehen, dass der Grundkörper mit dem ersten Schleifsegment einstückig ausgebildet ist, und dass der Grundkörper axial beabstandet vom ersten Schleifsegment wenigstens einen Tragabschnitt aufweist, mit dessen Umfang wenigstens ein zweites Schleifsegment kraftschlüssig verbunden ist. Diese kraftschlüssige Verbindung ist bevorzugt dauerhaft und nicht bzw. nicht ohne Beschädigung lösbar.

Zunächst werden einige im Rahmen der Erfindung verwendeten Begriffe erläutert.

Das erfindungsgemäße profilierte Schleifwerkzeug dient der Bearbeitung von Werkstücken wie Maschinenelementen als Bestandteil von Getrieben oder zur Kraftübertragung, insbesondere Zahnrädern und Getrieberädern. Der Begriff Zahnräder kann generell Maschinenelemente als Bestandteil von Getrieben oder zur Kraftübertragung umfassen. Die Oberflächenform (Profil) des profilierten Schleifwerkzeugs korrespondiert mit der Form des zu bearbeitenden Maschinenelements. Das Schleifwerkzeug greift in die Verzahnung bspw. des Zahnrads oder Getrieberads ein. Im Kontext der vorliegenden Erfindung bezeichnet der Begriff profiliertes Schleifwerkzeug auch ein solches Schleifwerkzeug, das beim Endanwender vor der Verwendung profiliert wird, d. h. mit der gewünschten Profilform versehen wird. Ein erfindungsgemäßes profiliertes Schleifwerkzeug ist regelmäßig mit einem Profil ausgebildet.

Der Grundkörper ist zum kraftschlüssigen Verbinden mit einem Antriebselement ausgebildet, zu diesem Zweck weist er regelmäßig eine hohlzylindrische Ausformung auf.

Das Schleifwerkzeug weist wenigstens zwei in Axialrichtung voneinander beabstandete und in Umfangsrichtung wirkende Schleifsegmente auf. Die Axialrichtung entspricht der Rotationsachse des Werkzeugs. Die Schleifsegmente wirken in Umfangsrichtung, d. h. sie sind dergestalt ausgebildet, dass eine Bearbeitung des Werkstücks mit den (profilierten) Umfangsflächen erfolgt.

Die Schleifsegmente weisen unterschiedliche Elastizitätsmodule auf, wie im Patentanspruch definiert. Gemeinsam bilden sie ein Zwei-oder Mehr-Zonen-Schleifwerkzeug. Eine erste Zone, die von der Schleiffläche des ersten Schleifsegments gebildet wird, dient dem Schleifvorgang, bei dem eine Verbesserung der geforderten geometrischen Genauigkeit erfolgt. Eine zweite Zone, die von der Schleiffläche des zweiten Schleifsegments gebildet wird, dient im Zuge der Feinbearbeitung dem dem gezielten Einebnen der Rautiefen mit nur sehr geringem Materialabtrag auf funktionelle (strukturelle bzw. optische) Zielparameter. Der Elastizitätsmodul des zweiten Schleifsegments ist geringer als der Elastizitätsmodul des ersten Schleifsegments. Durch die Ausbildung des Schleifwerkzeugs mit wenigstens zwei Zonen können beide Bearbeitungsschritte kontinuierlich erfolgen. Eine Unterbrechung des Bearbeitungsvorgangs zum Wechseln der Werkzeuge wird so vermieden.

Erfindungsgemäß ist vorgesehen, dass der Grundkörper mit dem ersten Schleifsegment einstückig ausgebildet ist. Der Grundkörper mit hohem Elastizitätsmodul und hoher Festigkeit stellt somit zum einen die kraftschlüssige und formtreue Verbindung mit dem Werkzeugträger her, zum anderen durch die einstückige Ausbildung mit dem ersten Schleifsegment dessen Festigkeit und Formtreue.

Der Grundkörper weist axial beabstandet vom ersten Schleifsegment wenigstens einen Tragabschnitt auf, mit dessen Umfang wenigstens ein zweites Schleifsegment kraftschlüssig verbunden ist. Der Kraftschluss ist dauerhaft und kann bspw. ein Stoffschluss sein. Dauerhaft bedeutet, dass der Kraftschluss nicht oder nur unter Beschädigung/Zerstörung von Grundkörper und/oder entsprechendem Schleifsegment gelöst werden kann. Dieses zweite Schleifsegment mit niedrigerem Elastizitätsmodul wird somit vom Umfang des entsprechenden Tragabschnitts des Grundkörpers mittels der dauerhaft kraftschlüssigen Verbindung gehalten und angetrieben. Dies bedeutet, dass erfindungsgemäß keine Krafteinleitung in das zweite Schleifsegment über dessen Stirnflächen erfolgen muss.

Dies hat den besonderen Vorteil, dass eine beispielsweise durch Fliehkräfte bewirkte Verformung des zweiten Schleifsegments nicht beeinflusst wird durch eine stirnseitige Verbindung, beispielsweise Verklebung, mit dem ersten Schleifsegment, dessen Elastizitätsmodul unterschiedlich ist.

Eine solche Verformung kann mangelhafte Bearbeitungsergebnisse insbesondere dann bewirken, wenn das zweite Schleifsegment auf einer Stirnseite mit dem ersten Schleifsegment verklebt ist (wie im Stand der Technik üblich), während die zweite Stirnseite offen und nicht verklebt ist, wodurch sich das zweite Schleifsegment unter Einwirkung von Fliehkräften asymmetrisch unter Verlust der Profiltreue verformen kann. Erfindungsgemäß kann sich hingegen das zweite Schleifsegment mit vergleichsweise höherer Elastizität an beiden Stirnseiten durch Fliehkräfte ausdehnen unbeeinflusst von einer stirnseitigen Verbindung bzw. Verklebung an einer Stirnseite.

Der vergleichsweise feste Grundkörper nimmt die beim Aufspannen entstehenden Kräfte auf und verhindert damit eine ungewollte Deformation des vergleichsweise elastischeren zweiten Schleifsegments durch Spannkräfte.

Kerngedanke der Erfindung ist es, dass Grundkörper und damit einstückig ausgebildetes erstes Schleifsegment einerseits und mit dem Tragabschnitt des Grundkörpers dauerhaft kraftschlüssig verbundenes zweites Schleifsegment (und gegebenenfalls weitere Schleifsegmente) andererseits ein einfach und kostengünstig herzustellendes Schleifwerkzeug bilden, bei dem jedes Segment im Zuge der Anwendung eine hohe Formtreue aufweist und das insgesamt beständig gegenüber Fliehkraftbelastungen ist.

Eine kraftschlüssige Verbindung im Sinne der Erfindung kann beispielsweise einen Formschluss, einen Stoffschluss oder Kombinationen daraus aufweisen. Kraftschlüssig bedeutet, dass die bei der Benutzung des Werkzeugs auftretenden Kräfte eingeleitet werden können, ohne dass es zu einem Lösen der Verbindung oder einer nennenswerten Verdrehung des zweiten Schleifsegments gegenüber dem Grundkörper kommt. Die kraftschlüssige Verbindung ist dauerhaft und damit unlösbar. Dies bedeutet, dass sich Grundkörper und zweites Schleifsegment nicht ohne Beschädigung trennen lassen. Es kann sich beispielsweise um eine Verbindung handeln, bei der entweder ein Klebstoff und/oder ein Polymermaterial des zweiten (oder weiteren) Schleifsegments selbst in den vorzugsweise aus einem Keramikmaterial bestehenden Grundkörper infiltrieren. Eine solche Infiltration bewirkt einen Formschluss des infiltrierten Materials mit den Poren, eine etwaige Verklebung einen Stoffschluss der verklebten Materialien. Sofern das zweite oder weitere Schleifsegment beim Aufbringen auf den Grundkörper ausgehärtet wird (beispielsweise ein organisch gebundenes Schleifsegment), kann es durch eine Schrumpfung beim Aufbringen zur Ausbildung einer (zusätzlichen) Haftreibkraft zwischen Schleifsegment und Grundkörper kommen, die den Kraftschluss ausbildet bzw. verstärkt.

In einer Ausführungsform des erfindungsgemäßen Schleifwerkzeugs weisen das erste Schleifsegment und das zweite Schleifsegment in einem wenigstens ein Viertel des Schleifwerkzeugradius einehmenden, zum Außenumfang weisenden Radialabschnitt keine kraftschlüssige Verbindung auf. Dies bedeutet, dass die beiden Segmente jedenfalls in einem zum Außenumfang weisenden Radialabschnitt keine Verbindung in Axialrichtung, insbesondere keine stirnseitige Verbindung oder Verklebung aufweisen. Mindestens in diesem Bereich können sich die beiden Segmente unter dem Einfluss von Fliehkräften bzw. Anpressdruck unabhängig voneinander verformen, so dass die unterschiedlichen Elastizitätsmodule nicht aufgrund einer stirnseitig in Verbindung in dem entsprechenden Abschnitt dazu führen, dass die Verformung eines Segments Einfluss auf die Formtreue des anderen Segments nimmt.

Bevorzugt ist es, wenn erstes und zweites Schleifsegment über den gesamten Radialabschnitt, der sich vom Außenumfang des Tragabschnitts zum Außenumfang des gesamten Werkzeugs erstreckt, keine stirnseitige Verbindung aufweisen so dass das zweite Segment mit dem niedrigeren Elastizitätsmodul keinen Krafteintrag von der Stirnseite erfährt.

Erfindungsgemäß kann zwischen den Stirnseiten des ersten Schleifsegments und des zweiten Schleifsegments eine Lücke bzw. ein Spalt vorgesehen sein. Dieser Spalt stellt sicher, dass beide Schleifsegmente sich weitgehend frei aufgrund der Fliehkräfte ausdehnen können, ohne durch das jeweils andere Segment beeinflusst zu werden.

In einer Ausführungsform ist ein erster Axialabschnitt des Grundkörpers mit einem größeren Radius als Schleifsegment ausgebildet. Ein zweiter Axialabschnitt des Grundkörpers mit einem kleineren Radius ist als Tragabschnitt ausgebildet.

Vorzugsweise sind der erste und der zweite Axialabschnitt im Wesentlichen zylindrisch ausgebildet. Im Wesentlichen zylindrisch umfasst auch Ausführungsformen, in denen die Oberflächenform des Schleifsegments profiliert ist. Die abrasiven Oberflächen können komplementär zum zu bearbeitenden Zahnradprofil ausgebildet sein. Das Profil der Segmente kann mit einer Profiliermaschine ausgearbeitet werden. Dadurch kann das Schleifwerkzeug das für die Schleifaufgabe geeignete Profil erhalten. Die Profiliermaschine kann auch zum Abrichten des Profils nach Abnutzung des Schleifwerkzeugs eingesetzt werden. Das erste und zweite Schleifsegment können ggf. in einem einheitlichen Durchlauf der Profiliermaschine ausgearbeitet werden.

Mit dem erfindungsgemäßen Werkzeug kann ein Zahnrad durch Schleifen in einem Bearbeitungsvorgang, beispielsweise Wälzschleifen, geformt und oberflächenbearbeitet werden. Durch kontinuierliches Wälzschleifen kann eine hohe Teilungsgenauigkeit und/oder Rundlaufgenauigkeit erreicht werden.

Der erste und zweite Axialabschnitt des Grundkörpers sind vorzugsweise gemeinsam hohlzylindrisch ausgebildet, bilden somit vorzugsweise einen einheitlichen Hohlraum, der zum Aufspannen auf ein Antriebselement ausgebildet sein kann.

In einer Ausführungsform durchdringt das Tragelement das gesamte zweite Schleifsegment in axialer Richtung, ragt also an der vom ersten Schleifsegment abgewandten Axialrichtung aus dem zweiten Schleifsegment (bevorzugt nur geringfügig) heraus. Dies ermöglicht das Aufspannen des erfindungsgemäßen Werkzeuges, ohne dass das zweite Segment durch das Einwirken von Spannkräften deformiert wird.

Die axiale Länge des ersten Schleifsegments kann beispielsweise mit der Länge des zweiten Schleifsegments in einem Verhältnis zwischen 115:45 und 100:60 stehen.

Bevorzugt ist das zweite Schleifsegment im Wesentlichen hohlzylindrisch ausgebildet. Bevorzugt erfolgt der Kraftschluss zwischen Tragabschnitt und zweitem Schleifsegment ausschließlich über die dauerhaft kraftschlüssig verbundenen Umfangsflächen.

Der Grundkörper und das erste Schleifsegment sind bevorzugt keramisch ausgebildet, können beispielsweise ein keramisches Bindemittel aufweisen. Bei dem ersten Schleifsegment ist bevorzugt Schleifkorn wie beispielsweise Korund in dem Keramikmaterial gebunden. So kann sich die Oberfläche des ersten Schleifsegments zur Grobbearbeitung von Zahnrädern eignen, wobei ein hohes Spanvolumen in kurzer Zeit erreicht werden kann.

Das zweite Schleifsegment kann eine Polymermatrix mit darin eingebettetem Schleifmaterial, bspw. Schleifkorn oder Mikroschleifkugeln bspw. aus Glas, aufweisen. Beispielsweise kann es Polyurethan als Matrixmaterial aufweisen, in dem Korund oder ein anderes Schleifkorn bzw. Poliermittel gebunden ist.

Erfindungsgemäß kann das Tragelement in seinem Axialabschnitt, mit dessen Umfang das zweite Schleifsegment dauerhaft kraftschlüssig verbunden ist, eine Infiltration des Polymermaterials des zweiten Schleifsegments aufweisen. So ist das zweite Schleifsegment durch Infiltration unlösbar und kraftschlüssig radial mit dem Tragelement verbunden. Die radiale Eindringtiefe der Infiltration kann wenigstens 0,5 mm, bevorzugt wenigstens 1,5 mm betragen. Vorzugsweise ist das Material des Grundkörpers und damit Tragelements porös und weist bevorzugt einen Porenanteil von 30 % bis 60 Vol.-% auf. Das Material des zweiten Schleifsegments kann in die Poren des Tragelements eindringen.

Der Elastizitätsmodul des zweiten Schleifsegments ist geringer als der Elastizitätsmodul des ersten Schleifsegments. Bevorzugt kann der Elastizitätsmodul des zweiten Schleifsegments 25 %, 10 % oder 5 % des Elastizitätsmoduls des ersten Schleifsegments betragen.

In einer bevorzugten Ausführungsform beträgt der Elastizitätsmodul des ersten Schleifsegments 20 bis 70 GPa, vorzugsweise 20 bis 40 GPa. Der Elastizitätsmodul des zweiten Schleifsegments kann 1 bis 5 GPa betragen, vorzugsweise 2 bis 4 GPa, weiter vorzugsweise 2 bis 3 GPa. Die Dichte des ersten Schleifsegments kann 1,0 bis 2,5 g/cm³ betragen, vorzugsweise 1,7 bis 1,9 g/cm³, und die Dichte des zweiten Schleifsegments kann 0,95 bis 1,87 g/cm³ betragen, vorzugsweise 1,11 bis 1,45 g/cm³. Die Porosität des ersten Schleifsegments kann 30 bis 60% betragen, vorzugsweise 45 bis 50%. Die Porosität des zweiten Schleifsegments kann 20 bis 50% betragen.

Das zweite Schleifsegment kann Makroporen mit einer Porengröße von 200 bis 500 µm und Mikroporen mit einer Porengröße von 3 bis 6 µm aufweisen.

Das Material der Polymermatrix kann ausgewählt sein aus der Gruppe bestehend aus Polyurethanen, Epoxidharzen, Phenolharzen und Kompositen. Das erste und/oder zweite Schleifsegment können eingelagertes Schleifkorn oder sonstige Schleifkörper wie bspw. Glaskugeln, vorzugsweise Korundschleifkorn, enthalten.

In einer bevorzugten Ausführungsform weist der Schleifkörper eine Mindestbruchgeschwindigkeit bzw. Bruchumfangsgeschwindigkeit von wenigstens 40 m/s auf.

Die Erfindung umfasst auch ein Verfahren zur Herstellung eines erfindungsgemäßen Schleifwerkzeugs. Das Verfahren umfasst die folgenden Schritte:
a. zur Verfügung stellen des Grundkörpers mit Tragelement und erstem Schleifsegment,
b. zur Verfügung stellen eines aushärtbaren Materials zur Herstellung des zweiten Schleifsegments,
c. Anformen des aushärtbaren Materials zur Herstellung des zweiten Schleifsegments an den Tragabschnitt,
d. Aushärten des aushärtbaren Materials zur Herstellung des zweiten Schleifsegments.

Zunächst wird ein Grundkörper hergestellt, der einen Tragabschnitt und ein erstes Schleifsegment umfasst. Ein aushärtbares Material wird zur Verfügung gestellt und so an den Tragabschnitt angeformt, dass ein zweites Schleifsegment aus dem aushärtbaren Material hergestellt wird. Schließlich wird das aushärtbare Material ausgehärtet.

In einer bevorzugten Variante des Verfahrens kann das Anformen (Schritt c) des aushärtbaren Materials zur Herstellung des zweiten Schleifsegments an das Tragelement durch Formguss erfolgen.

In dieser Variante des Verfahrens kann beispielsweise das zweite Schleifsegment durch Formguss um den Tragabschnitt herum hergestellt werden. Das zweite Schleifsegment kann radial um den Tragabschnitt, der die Rotationsachse des Schleifwerkzeugs umschließt, herum aufgegossen werden. Eine Form kann verwendet werden, die das zweite Schleifsegment umschließt. Der Formguss kann auch ein Aufschäumen oder Spritzen des Materials des zweiten Schleifsegments umfassen. Das Aufgießen kann auch ein Eintauchen des Tragabschnitts in ein aushärtbares Material des zweiten Schleifsegments umfassen. Das Material kann sich zum Aufgießen oder Aufschäumen eignen. Beispielsweise kann es sich um Polyurethan mit eingelagertem Schleifkorn handeln. Durch das Aufgießen kann ein Verkanten vermieden werden, das beim Fügen von zwei bestehenden Schleifsegmenten auftreten kann.

In einer Variante des Verfahrens kann das aushärtbare Material zur Herstellung des zweiten Schleifsegments eine Viskosität aufweisen, die ein Infiltrieren in den Tragabschnitt ermöglicht. Das Material des zweiten Schleifsegments, das auf den Tragabschnitt aufgegossen wird, kann den Tragabschnitt infiltrieren und so eine Umfangsverbindung mit dem Tragabschnitt eingehen.

Während des Aufgießens des Materials des zweiten Schleifsegments kann die zugewandte Stirnseite des ersten Schleifsegments abgedeckt sein. Die Abdeckung kann aus einem Papiermaterial oder Polymermaterial, beispielsweise mit einer Dicke von 0,2 mm bis 1 mm, bestehen. Die Abdeckung kann nach der Herstellung entfernbar sein. Wenn die Abdeckung entfernt wird, kann eine axiale Lücke zwischen den Stirnseiten des ersten und des zweiten Schleifsegments verbleiben. Alternativ ist es möglich, die zugewandte Stirnseite des ersten Schleifsegments mit einem Trennmittel zu belegen, welches die Verbindung der Materialien des ersten und des zweiten Schleifsegments verhindert. In diesem Falle entsteht keine axiale Lücke zwischen den Stirnseiten des ersten und des zweiten Schleifsegments, das Trennmittel verhindert jedoch einen stirnseitigen Kraftschluss.

Ein erfindungsgemäßes Werkzeug kann mehr als zwei Schleifsegmente aufweisen. Insbesondere ist es beispielsweise möglich, dass an beiden axialen Seiten des mit dem Grundkörper einstückig verbundenen ersten Schleifsegments zweite bzw. dritte Schleifsegmente angeordnet sind, die jeweils mit einem zugehörigen Tragabschnitt dauerhaft kraftschlüssig verbunden sind. Ebenso ist es möglich, dass ein Schleifsegment bevorzugt in Axialrichtung Bereiche mit unterschiedlichen Schleifeigenschaften aufweist, beispielsweise mit unterschiedlichem Schleifkorn versehen ist. Gemäß einem weiteren Aspekt kann ein zweites Schleifsegment insbesondere in Radialrichtung unterschiedliche Materialien aufweisen, beispielsweise kann sich ein bevorzugt fester, polymerer Bereich um den Tragabschnitt herum erstrecken, auf den Außenumfang dieses Polymerkörpers kann ein beispielsweise elastischer Belag mit Schleifmittel aufgebracht sein.

Das erfindungsgemäße Werkzeug lässt sich einfach und kostengünstig herstellen, es erfolgt lediglich ein direktes Fügen des zweiten Schleifsegments auf den Tragabschnitt des Grundkörpers, mit dem Grundkörper ist das erste Schleifsegment bereits einstückig ausgeführt. Das erfindungsgemäße Verfahren erlaubt dabei eine gute dauerhaft kraftschlüssige und formschlüssige Verankerung des zweiten Schleifsegments am Tragabschnitt des Grundkörpers. Die Stirnseiten der beiden Schleifsegmente sind nicht miteinander verbunden und weisen keinen Kraftschluss auf, Schubspannungen an der Grenzfläche der beiden Segmente treten daher nicht auf. Dies verbessert die Formtreue beim Schleifen und erhöht die Mindestbruchgeschwindigkeit des Werkzeugs. Die Mindestbruchgeschwindigkeit liegt erfindungsgemäß bei wenigstens 40 m/s, vorzugsweise wenigstens 80 m/s, weiter vorzugsweise wenigstens 100 m/s. Beispielhaft erreichte Mindestbruchgeschwindigkeiten sind 115 bzw. 125 m/s.

Ein Ausführungsbeispiel der Erfindung wird nachfolgend anhand der Zeichnungen beschrieben. Dabei zeigt:
- Fig. 1: eine Seitenansicht einer Ausführungsform des erfindungsgemäßen Schleifwerkzeugs (7), und
- Fig. 2: eine Draufsicht einer Ausführungsform des erfindungsgemäßen Schleifwerkzeugs (7) von der Seite des zweiten Schleifkörpers.

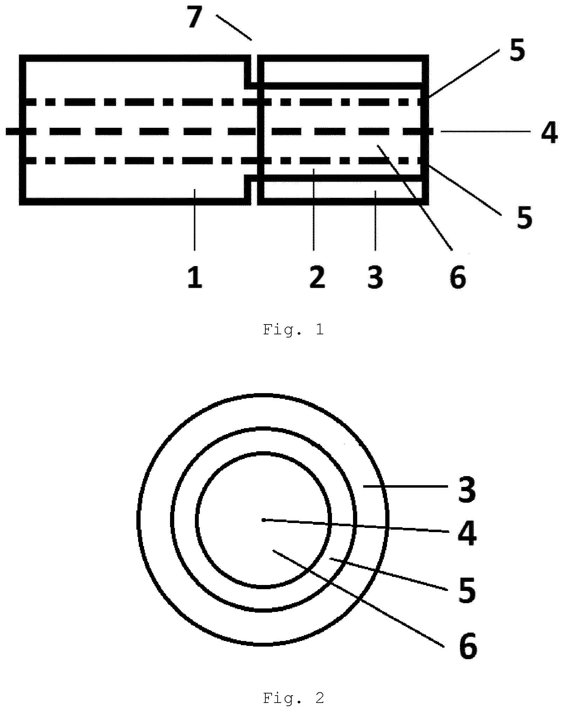

In dem Ausführungsbeispiel in Fig. 1 weist der Grundkörper ein Schleifsegment (1) und einen Tragabschnitt (2) auf, die rotationssymmetrisch die Rotationachse (4) des Schleifwerkzeugs (7) umschließen. Ein zweites Schleifsegment (3) ist rotationssymmetrisch um den Tragabschnitt (2) des Grundkörpers angeordnet. Der Tragabschnitt (2) weist eine Stirnfläche (5) einer der Befestigung bzw. dem Aufspannen des Schleifwerkzeugs (7) dienenden hohlzylindrischen Bohrung (6) auf.

In der Draufsicht auf das Schleifwerkzeug (7) in Fig. 2 befindet sich die Rotationsachse (4) in der Mitte der Bohrung (6). Die Bohrung wird durch die Stirnfläche (5) des Tragabschnitts (2) begrenzt und erstreckt sich durch die gesamte Länge des Grundkörpers aus erstem Schleifsegment (1) und Tragabschnitt (2) .

Der Außendurchmesser kann bei einem Ausführungsbeispiel zwischen 275 und 280 mm liegen. Die Breite beträgt bevorzugt 160 mm. Die Innendurchmesser der hohlzylindrischen Bohrung zur Aufnahme des Werkzeugträgers richten sich nach dem verwendeten Werkzeugträger und können beispielsweise zwischen 115 und 160 mm liegen. Der Außendurchmesser des Tragelements kann bspw. 210 mm betragen.

Der Elastizitätsmodul des keramischen Grundkörpers und des ersten Schleifsegments kann beispielsweise zwischen 22 und 38 GPa liegen. Der Elastizitätsmodul des zweiten Schleifsegments kann beispielsweise zwischen 2 GPa und 3 GPa liegen. Die Dichte kann beispielsweise bei etwa 1,42 g/cm³ liegen, bevorzugte Bereiche sind 1,12 - 1,45 g/cm³. Eine niedrigere Dichte am unteren Rand dieses Bereichs kann insbesondere dann verwendet werden, wenn eine hohe Porosität gewählt wird.

Bei einer bevorzugten Variante des Verfahrens zur Herstellung des in Fig. 1 und 2 gezeigten Schleifwerkzeugs (7) wird das Material des zweiten Schleifsegments (3) ringförmig um den Tragabschnitt (2) angeformt, angegossen oder aufgeschäumt. Dazu kann eine ringförmige Form genutzt werden, die das Schleifwerkzeug (7) zumindest radial umschließt. Erfindungsgemäß kann beispielsweise das Rencast System der Firma Huntsman verwendet werden.

Bei einem Ausführungsbeispiel ist das Material des Grundkörpers ein keramisch gebundenes Korund-Material (z.B. 3SK3), Körnung F120, geringer Härte H, poröses Gefüge 12 und einer Bindung V09 aus Fritte, Ton und Flussmittel. Aus diesem Grundkörper wird der Tragabschnitt als Abschnitt mit reduziertem Durchmesser abgedreht. Die dem Tragabschnitt zugewandte Stirnfläche des ersten Schleifsegments wird abgedeckt oder mit einem Trennmittel (z.B. EWOmold 5716 Firma Eckert & Woelk GmbH ) versehen. Der so vorbereitete Grundkörper wird in eine Aluminiumform eingebracht, deren Innenradius mit dem Außenradius des ersten Schleifsegments abschließt und deren Höhe der axialen Länge des Grundkörpers im Wesentlichen entspricht. Für die Herstellung des zweiten Schleifsegments wird folgende Mischung angesetzt:

| | |
|---|---|
| Polyol: | 21 Ma% Huntsman Rencast^{®} FC 52/53 |
| Isocyanat: | 21 Ma% Huntsman Rencast^{®} FC 52 |
| Korn: | 58 Ma% EKW (Körnung: F800) |
| Schaumbildner: | 0,5 Ma% Wasser |

Die Mischung wird 2-3 min homogenisiert, in die Form gegeben und wenigstens 20 min darin belassen. Danach erfolgt das Ausschalen der Schleifwerkzeugs aus der Aluminiumform. Eine anschließende thermische Behandlung bei bevorzugt 80°C für 14 h trägt zur Ausvernetzung des Polyurethansystems bei. Der Schleifkörper wird auf die Soll-Geometriemaße abgearbeitet, dabei werden überstehende Polyurethanränder und die Polyurethanhaut entfernt.

Bei der Nutzung des in Fig. 1 und 2 gezeigten Schleifwerkzeugs (7) kann das Schleifwerkzeug (7) auf ein Antriebselement und/oder Flansche aufgespannt werden. In Fig. 2 ist die Stirnfläche (5) des Tragabschnitts (2) erkennbar, an die ein Flansch angelegt werden kann. Dadurch wird eine Quetschung des elastischen zweiten Schleifsegments (3) vermieden.

## Patentansprüche

1. Profiliertes Schleifwerkzeug (7) zur rotierenden Bearbeitung von Werkstücken, insbesondere Zahnrädern und/oder Getrieberädern,
mit einem Grundkörper, der wenigstens eine als vorzugsweise hohlzylindrische Ausformung (6) ausgebildete Einrichtung zum Aufspannen auf einen Werkzeugträger aufweist, und
mit wenigstens zwei in Axialrichtung voneinander beabstandeten und in Umfangsrichtung wirkenden Schleifsegmenten (1, 3),
wobei das zweite Schleifsegment (3) einen Elastizitätsmodul aufweist, der geringer ist als der Elastizitätsmodul des ersten Schleifsegments (1),
**dadurch gekennzeichnet, dass**
der Grundkörper mit dem ersten Schleifsegment (1) einstückig ausgebildet ist, und dass
der Grundkörper axial beabstandet vom ersten Schleifsegment (1) wenigstens einen Tragabschnitt (2) aufweist, mit dessen Umfang wenigstens ein zweites Schleifsegment (3) dauerhaft kraftschlüssig verbunden ist.

2. Schleifwerkzeug nach Anspruch 1, **dadurch gekennzeichnet, dass** das erste Schleifsegment (1) und das zweite Schleifsegment (3) in einem wenigstens ein Viertel des Schleifwerkzeugradius einehmenden Radialabschnitt keine kraftschlüssige Verbindung miteinander aufweisen.

3. Schleifwerkzeug nach Anspruch 1 oder 2, **dadurch gekennzeichnet, dass** der Grundkörper einen als erstes Schleifsegment (1) ausgebildeten ersten Axialabschnitt größeren Radius und einen als Tragabschnitt (2) ausgebildeten zweiten Axialabschnitt kleineren Radius aufweist.

4. Schleifwerkzeug nach Anspruch 3, **dadurch gekennzeichnet, dass** erster und zweiter Axialabschnitt im Wesentlichen zylindrisch ausgebildet sind.

5. Schleifwerkzeug nach Anspruch 4, **dadurch gekennzeichnet, dass** erster und zweiter Axialabschnitt hohlzylindrisch ausgebildet sind, wobei der Zylinderhohlraum (6) zum Aufspannen auf einen Werkzeugträger ausgebildet ist.

6. Schleifwerkzeug nach Anspruch 4 oder 5, **dadurch gekennzeichnet, dass** das zweite Schleifsegment (3) im Wesentlichen hohlzylindrisch ausgebildet ist, wobei vorzugsweise der Kraftschluss zwischen Tragabschnitt (2) und zweitem Schleifsegment (3) ausschließlich über die kraftschlüssig verbundenen Umfangsflächen erfolgt.

7. Schleifwerkzeug nach einem der Ansprüche 1 bis 6, **dadurch gekennzeichnet, dass** der Grundkörper keramisch gebunden ist.

8. Schleifwerkzeug nach einem der Ansprüche 1 bis 7, **dadurch gekennzeichnet, dass** das zweite Schleifsegment (3) eine Polymermatrix mit darin eingebettetem Schleifmaterial aufweist.

9. Schleifwerkzeug nach Anspruch 8, **dadurch gekennzeichnet, dass** der Grundkörper in seinem Axialabschnitt, mit dessen Umfang das zweite Schleifsegment (3) dauerhaft kraftschlüssig verbunden ist, eine Infiltration des Polymermaterials des zweiten Schleifsegments aufweist.

10. Schleifwerkzeug nach einem der Ansprüche 1 bis 9, **dadurch gekennzeichnet, dass** der Elastizitätsmodul des zweiten Schleifsegments (3) höchstens 25 %, vorzugsweise höchstens 10 %, weiter vorzugsweise höchstens 5 % des Elastizitätsmoduls des ersten Schleifsegments (1) beträgt.

11. Schleifwerkzeug nach einem der Ansprüche 1 bis 10, **gekennzeichnet durch** eines oder mehrere der folgenden Merkmale:
a. der Elastizitätsmodul des ersten Schleifsegments (1) beträgt 20 bis 70 GPa, vorzugsweise 20 bis 40 GPa,
b. der Elastizitätsmodul des zweiten Schleifsegments (3) beträgt 1 bis 5 GPa, vorzugsweise 2 bis 4 GPa, weiter vorzugsweise 2 bis 3 GPa,
c. die Dichte des ersten Schleifsegments (1) beträgt 1,0 bis 2,5 g/cm³, vorzugsweise 1,7 bis 1,9 g/cm³,
d. die Dichte des zweiten Schleifsegments (3) beträgt 0,95 bis 1,87 g/cm³, vorzugsweise 1,11 bis 1,45 g/cm³,
e. die Porosität des ersten Schleifsegments (1) beträgt 30 bis 60%, vorzugsweise 45 bis 50%,
f. die Porosität des zweiten Schleifsegments (3) beträgt 20 bis 50%,
g. das Material der Polymermatrix ist ausgewählt aus der Gruppe bestehend aus Polyurethanen, Epoxidharzen, Phenolharzen und Kompositen,
h. das erste und/oder zweite Schleifsegment (1, 3) enthalten eingelagertes Schleifkorn oder Poliermittel, vorzugsweise Korundschleifkorn.

12. Schleifwerkzeug nach einem der Ansprüche 1 bis 11, **dadurch gekennzeichnet, dass** es eine Mindestbruchgeschwindigkeit von wenigstens 40 m/s aufweist.

13. Verfahren zur Herstellung eines Schleifwerkzeugs nach einem der Ansprüche 1 bis 11, **gekennzeichnet durch** die Schritte:
a. zur Verfügung stellen des Grundkörpers mit Tragabschnitt (2) und erstem Schleifsegment (1),
b. zur Verfügung stellen eines aushärtbaren Materials zur Herstellung des zweiten Schleifsegments (3),
c. Anformen des aushärtbaren Materials zur Herstellung des zweiten Schleifsegments (3) an den Tragabschnitt (2),
d. Aushärten des aushärtbaren Materials zur Herstellung des zweiten Schleifsegments (3).

14. Verfahren nach Anspruch 13, **dadurch gekennzeichnet, dass** das Anformen des aushärtbaren Materials zur Herstellung des zweiten Schleifsegments (3) an das Tragelement durch Formguss erfolgt.

15. Verfahren nach Anspruch 14, **dadurch gekennzeichnet, dass** das aushärtbare Material zur Herstellung des zweiten Schleifsegments (3) eine Viskosität aufweist, die ein Infiltrieren in den Tragabschnitt (2) ermöglicht.
